# EUROPÄISCHE PATENTSCHRIFT

(11) **EP 2 491 640 B1**
(45) Veröffentlichungstag und Bekanntmachung des Hinweises auf die Patenterteilung: **06.12.2017**
(21) Anmeldenummer: 10721922.2
(22) Anmeldetag: 27.05.2010
(51) Int. Cl.: H02K 1/27, H02K 7/106

(54) **BÜRSTENLOSER GLEICHSTROMMOTOR MIT STROMLOSER HEMMUNG**
BRUSHLESS DC MOTOR WITH NON-ELECTRICAL STOPPING
MOTEUR CC SANS BALAI AVEC BLOCAGE NON-ÉLECTRIQUE

(30) Priorität: 23.10.2009 CH 16242009
(43) Veröffentlichungstag der Anmeldung: 29.08.2012
(73) Patentinhaber: Belimo Holding AG, 8340 Hinwil (CH)
(72) Erfinder: FURRER, Roman, CH-8733 Eschenbach SG (CH); TAGHEZOUT, Daho, CH-1110 Morges (CH)
(74) Vertreter: Rentsch Partner AG
(86) Internationale Anmeldenummer: PCT/CH2010/000138
(87) Internationale Veröffentlichungsnummer: WO 2011/047488

(56) Entgegenhaltungen:
- EP-A1- 1 796 245
- DE-A1- 4 306 327
- DE-A1- 10 125 836
- DE-A1-102004 014 986
- DE-U1-202004 018 822

## Beschreibung

### Technisches Gebiet

Die vorliegende Erfindung betrifft einen bürstenlosen Gleichstrommotor mit stromloser Hemmung. Die vorliegende Erfindung betrifft insbesondere einen bürstenlosen, dreiphasigen, permanentmagnetischen Gleichstrommotor mit stromloser Hemmung, der einen Stator und einen den Stator umlaufenden Rotorbecher mit mehreren permanentmagnetischen Polen aufweist.

### Stand der Technik

Um einen Elektromotor, der ausser Betrieb ist und nicht elektrisch gespeist wird, in eine gewünschte Raststellung zu bringen, beispielsweise um zu verhindern, dass eine von einem Antrieb angetriebene Klappe sich bewegt oder ein Ventil sich dreht, werden typischerweise Hemmfedern eingesetzt, die permanent auf das Getriebe des Antriebs drücken und dadurch eine Drehung des Motors im stromlosen Zustand möglichst verhindern. Die Verwendung von Hemmfedern ist zwar kostengünstig hat aber den Nachteil, dass sie den Motor auch im Betrieb bremsen und damit zu Leistungsverlusten führen. Dadurch wird die durch eine Hemmfeder erzeugbare maximale Hemmung limitiert. Durch den mechanischen Kontakt der Hemmfeder mit dem Getriebe entstehen im Betrieb zudem unerwünschte und oftmals störende Geräusche. Es ist überdies äusserst schwierig eine Hemmung des Antriebes mit Hemmfedern innerhalb einer definierten Toleranzgrenze zu erzeugen, was je nach Herstellungsstrategie zu Antrieben führt, die oft im Betrieb übermässig gebremst werden, oder die ausser Betrieb eine oft ungenügend Hemmung aufweisen.

In einem Elektromotor mit Permanentmagneten gibt es zwei Magnetfelder. Eines wird vom Permanentmagnet erzeugt und ist auch im stromlosen Zustand vorhanden. Ein zweites wird von von Strom durchflossenen Spulen erzeugt. Die Interaktion der beiden Magnetfelder verursacht die Drehbewegung und die Drehmomenterzeugung des Motors. Die Anwesenheit von ferromagnetischem Material (Eisen) verändert die Ausrichtung des Magnetfelds.

In DE 20 2004 018 822 U1 wird ein eisenloser und bürstenloser Elektromotor mit stromloser Hemmung beschrieben, der eine flache Bremsscheibe aus ferromagnetischem Material umfasst. Ein Permanentmagnet ist auf der Rotorwelle angebracht und wird mit Abstand (Luftspalt) von einer Spule umgeben, die an der Innenwand des Gehäusemantels befestigt ist und sich vom Gehäuseboden bis zum Gehäusedeckel erstreckt. Die Bremsscheibe ist auf der Innenseite des Gehäusedeckels angebracht und wirkt mit dem Magnetfeld des rotierenden Permanentmagneten so zusammen, dass der Rotor bei ausgeschaltetem Motor in einer definierten Raststellung gehalten wird. Da die Bremsscheibe innerhalb des Spulenbereichs und damit auch im Magnetfeld der Spule des Stators liegt, beeinflusst sie jedoch auch die Interaktion der beiden Magnetfelder im Betrieb und schmälert dadurch die Leistungsfähigkeit des Motors.

Die DE 10 2004 014986 zeigt das Anordnen eines Kurzschlussblechs bei einem Innenläufer, wobei bei einem Rotor mit einer Magnetanordnung zwei nebeneinander liegende Pole überbrückt werden, um ein Rastmoment zu erzeugen. Das Kurzschlussblech wird an der Stirnseite oder am Umfang des Rotors angeordnet, wobei im zweiten Fall der Rotor aus einem Stator des Innenläufers herausragt.

Die DE 101 25 836 zeigt einen Gleichstrommotor mit einem Gehäuse und einer drehbar gelagerten Ankerwelle. Die Bestromung eines Ankerpakets der Ankerwelle erfolgt über einen Kommutator. An der Ankerwelle ist ein Drehsicherungselement vorgesehen, welches mit gehäuseseitig angeordneten Permanentmagneten zusammenwirkt. Zur Verdrehung der Ankerwelle muss demnach ein Hemmmoment überwunden werden.

### Darstellung der Erfindung

Es ist eine Aufgabe der vorliegenden Erfindung einen bürstenlosen Gleichstrommotor mit stromloser Hemmung vorzuschlagen, der zumindest einige Nachteile der bekannten Elektromotoren nicht aufweist. Es ist insbesondere eine Aufgabe der vorliegenden Erfindung einen bürstenlosen Gleichstrommotor mit stromloser Hemmung vorzuschlagen, der einen Stator und einen den Stator umlaufenden Rotorbecher mit mehreren permanentmagnetische Polen umfasst.

Gemäss der vorliegenden Erfindung werden diese Ziele insbesondere durch die Elemente des unabhängigen Anspruchs erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass ein (bürstenloser) Synchronmotor, mit einem Stator und einem den Stator umlaufenden Rotorbecher mit mehreren permanentmagnetischen Polen bereitgestellt wird, bei welchem ein mit dem Stator verbundenes Rastmomentblech mit mehreren Polschuhen zum Erzeugen eines den umlaufenden Rotorbecher in eine Raststellung bringenden Rastmoments vorgesehen ist, wobei die Polschuhe des Rastmomentblechs derart angeordnet sind, dass sie in der Raststellung jeweils zwischen zwei benachbarten Polen des umlaufenden Rotorbechers einen magnetischen Kurzschluss bilden. Durch die Erzeugung des Rastmoments mittels des Rastmomentblechs entfällt die Hemmfeder vollständig oder kann zumindest stark reduziert werden, so dass im Betrieb keine oder nur eine geringe Leistungsverminderung auf Grund der Hemmung verursacht wird, und dass zudem ein Rastmoment erzeugt wird, das innerhalb eines engen Toleranzbereichs einem definierten Nennwert entspricht und eine insgesamt höhere Hemmung als mit einer Hemmfeder ermöglicht. Die Erzeugung des Rastmoments durch ein Rastmomentblech, dessen Polschuhe zwischen benachbarten Polen eines umlaufenden Rotorbechers einen magnetischen Kurzschluss erzeugen, ermöglicht überdies eine besonders vorteilhafte Anordnung des Rastmomentblechs ausserhalb des durch den Stator im Betrieb erzeugten magnetischen Drehfelds. Dadurch werden eine Beeinflussung des elektrischen Verhaltens des bürstenlosen Gleichstrommotors und insbesondere ein leistungsmindernder Einfluss auf den bürstenlosen Gleichstrommotor durch die Anwesenheit des Rastmomentblechs verhindert.

Vorzugsweise ist das Rastmomentblech im Wesentlichen ausserhalb des durch den Stator im Betrieb erzeugten Magnetfelds angeordnet. Je nach Ausführung ist das Rastmomentblech in einer senkrecht zur Rotationsachse verlaufenden Ebene über oder unter dem Stator angeordnet. In einer Ausführungsvariante umfasst der bürstenlose Gleichstrommotor mehrere gleich ausgestaltete Rastmomentbleche, wobei mindestens eines der Rastmomentbleche in einer senkrecht zur Rotationsachse verlaufenden Ebene über dem Stator angeordnet ist und mindestens eines der Rastmomentbleche in einer senkrecht zur Rotationsachse verlaufenden Ebene unter dem Stator angeordnet ist. Durch die Platzierung des Rastmomentblechs ober- und/oder unterhalb des Stators ist das Rastmomentblech so angeordnet, dass es keinen Einfluss auf das Magnetfeld der Spulen des Stators hat. Dadurch wird der magnetische Kreis, welcher für das elektrische Verhalten des Motors im Betrieb verantwortlich ist, nicht durch die Anwesenheit des Rastmomentblechs beeinträchtigt. Das Rastmomentblech liegt somit ausserhalb des im Betrieb des bürstenlosen Gleichstrommotors auftretenden magnetischen Kreises, der sich von den Polschuhen des Stators über einen Luftspalt, die Permanentmagnete des Rotors und einen Rückfluss über den Rotorbecher schliesst. Durch die Platzierung des Rastmomentblechs ober- und/oder unterhalb des Stators lässt sich die Erzeugung des Rastmoments also vom elektrischen Verhalten des Motors entkoppeln und das elektrische Verhalten des bürstenlosen Gleichstrommotors wird durch die Anwesenheit des Rastmomentblechs nicht wesentlich beeinflusst. Somit können verglichen mit Hemmfedern um Faktoren grössere Hemmmomente erzeugt werden, die im Motorbetrieb praktisch keine Leistungsverluste erzeugen.
In einer bevorzugten Ausführungsvariante ist das Rastmomentblech so angeordnet, dass es auf seiner den Permanentmagneten zugewandten Stirnseite durch die Permanentmagnete überdeckt wird. Das Rastmomentblech ist somit vollständig im magnetischen Hauptfluss der Permanentmagnete angeordnet.
Vorzugsweise umfasst das Rastmomentblech eine Anzahl Polschuhe, die einem ganzzahligen Teiler oder Vielfachen der Anzahl Pole des umlaufenden Rotorbechers entspricht. Erfindungsgemäß sind die Polschuhe T-förmig ausgestaltet, und ihre Querbalken erstrecken sich in der Raststellung jeweils über einen Teilbereich der Permanentmagnete zweier benachbarter Pole des umlaufenden Rotorbechers.

In einer Ausführungsvariante sind die Querbalken der T-förmigen Polschuhe jeweils auf einem zum umlaufenden Rotorbecher konzentrischen Kreis angeordnet.

Vorzugsweise ist das Rastmomentblech an einem axialen Statorträger des Stators angebracht.

Der umlaufende Rotorbecher umfasst vorzugsweise Permanentmagnete aus hartmagnetischen Materialien wie beispielsweise Neodym-Eisen-Bor (NdFeB) und das Rastmomentblech besteht beispielweise aus magnetisch leitendem Material, insbesondere aus Eisen. Es kann aber auch aus anderen weichmagnetischen, halbhartmagnetischen oder hartmagnetischen Materialien bestehen.

In einer Ausführungsvariante umfasst der bürstenlose Gleichstrommotor mehrere gleich ausgestaltete, sich deckend übereinander angeordnete Rastmomentbleche.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1:: zeigt einen axialen Querschnitt einer beispielhaften Ausführung eines bürstenlosen Gleichstrommotors mit umlaufendem Rotorbecher und über dem Stator angeordnetem Rastmomentblech.
- Figur 2:: zeigt einen axialen Querschnitt des Stators des bürstenlosen Gleichstrommotors der Figur 1.

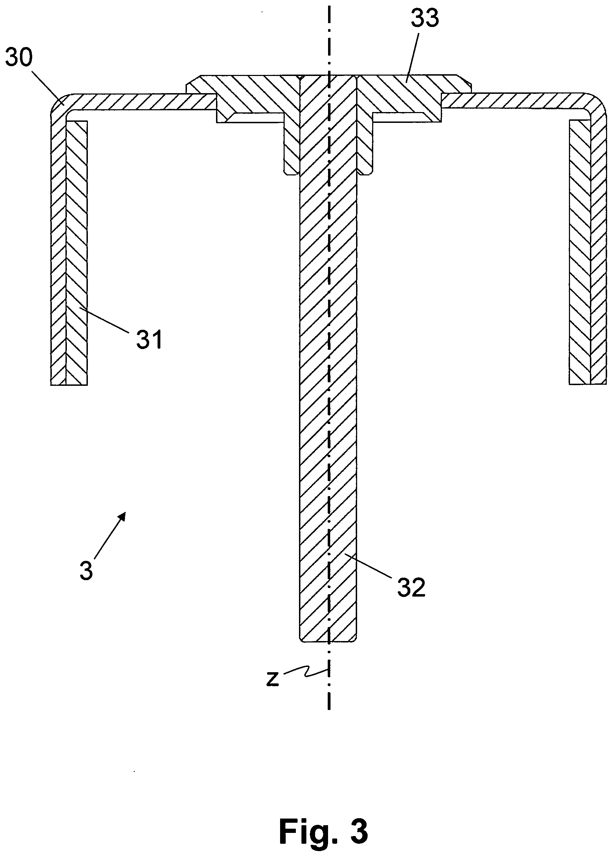

- Figur 3:: zeigt einen axialen Querschnitt des umlaufenden Rotorbechers des bürstenlosen Gleichstrommotors der Figur 1.
- Figur 4:: zeigt eine Aufsicht einer beispielhaften Ausführung des Rastmomentblechs.
- Figur 5:: zeigt einen senkrecht zur Rotationsachse verlaufenden Querschnitt durch das Rastmomentblech und den umlaufenden Rotorbecher mit schematischer Darstellung der Magnetfeldlinien in der Raststellung.

### Wege zur Ausführung der Erfindung

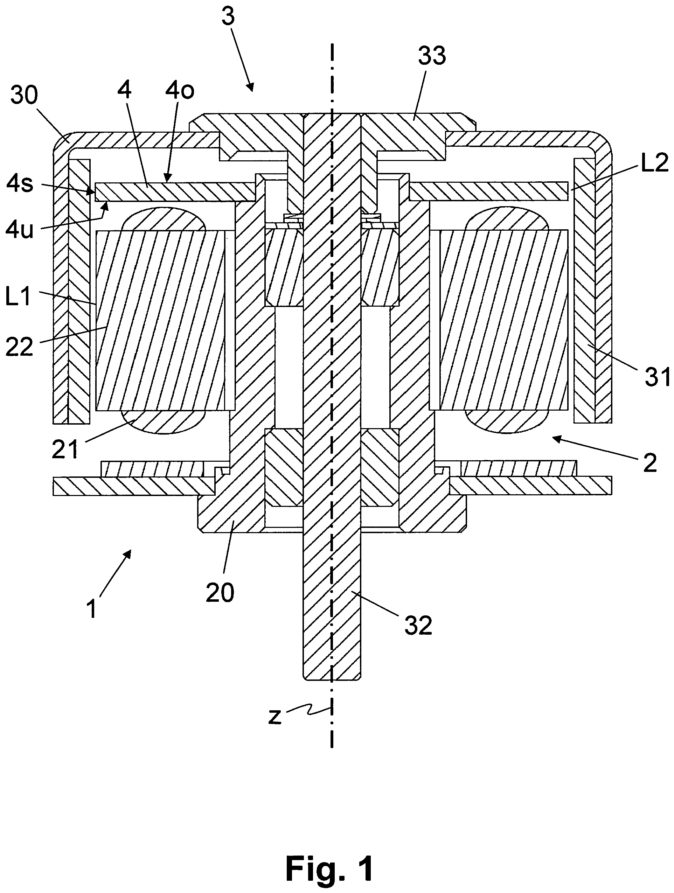

In der Figur 1 bezieht sich das Bezugszeichen 1 auf einen bürstenlosen Gleichstrommotor mit einem Stator 2 und einem umlaufenden Rotor 3 mit mehreren durch Permanentmagnete 31 gebildeten permanentmagnetischen Polen N, S. Der bürstenlosen Gleichstrommotor 1 ist insbesondere dreiphasig und beispielsweise als Steckantrieb ausgeführt und wird in der Heizungs-, Lüftungs- und Klimatechnik beispielsweise zum Öffnen und Schliessen von Klappen eingesetzt, wobei er mit grossen Getrieben mit einem Übersetzungsverhältnis von z.B. 1:5000 eingesetzt wird.

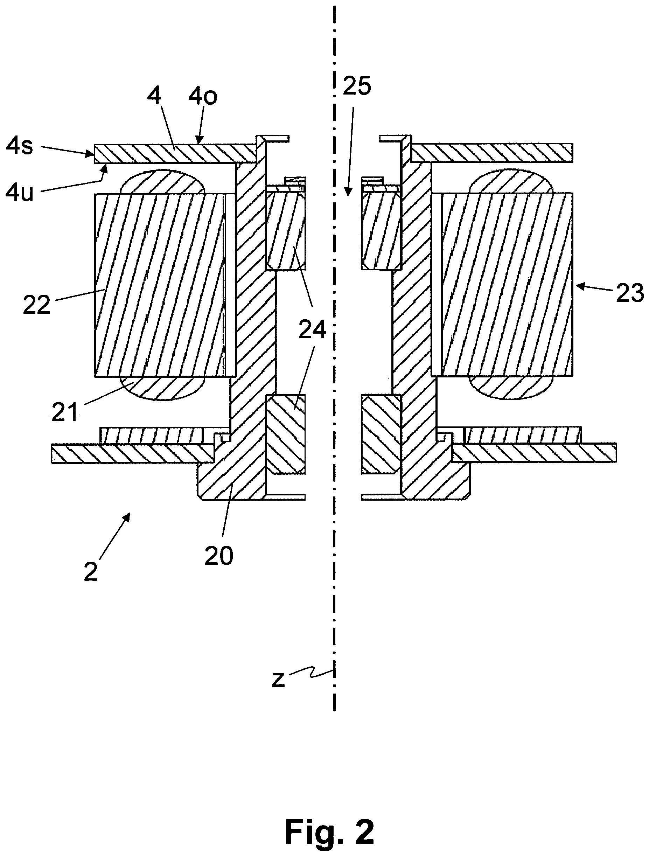

Der Stator 2 umfasst einen Statorträger 20, der im Wesentlichen hohlzylinderförmig, rotationssymmetrisch um die Rotationsachse z ausgebildet ist. Der Statorträger 20 weist einen unteren Endbereich zur Befestigung an einer tragenden Vorrichtung sowie einen dazu entgegengesetzten oberen Endbereich auf. Wie in den Figuren 1 und 2 dargestellt ist, umfasst der Stator 2 mehrere am Statorträger 20 angebrachte und rotationssymmetrisch um den Statorträger 20 herum angeordnete, jeweils aus Statorblechen 22 und Statorspulen 21 gebildete Polschuhe 23 zur Erzeugung des bewegten magnetischen Drehfelds im Betrieb des bürstenlosen Gleichstrommotors 1. Die Polschuhe 23 weisen jeweils eine senkrecht zur Rotationsachse z verlaufende Zentrumsachse auf, welche sich in einem gemeinsamen Schnittpunkt auf der Rotationsachse z schneiden.

Am Statorträger 20 ist zudem ein Rastmomentblech 4 angebracht, das vorzugsweise im oberen Endbereich, über dem Stator 2, insbesondere über den Polschuhen 23 des Stators 2, d.h. über den Statorblechen 22 und den Spulen 21, in einer senkrecht zur Rotationsachse z verlaufenden Ebene angeordnet und ausgerichtet ist. In einer Ausführungsvariante ist das Rastmomentblech 4 zudem oder als Alternative im unteren Endbereich, unterhalb des Stators 2, insbesondere unterhalb der Polschuhe 23 des Stators 2, d.h. unterhalb der Statorbleche 22 und der Spulen 21, in einer senkrecht zur Rotationsachse z verlaufenden Ebene angeordnet und ausgerichtet. In einer Variante ist das Rastmomentblech 4 mehrschichtig ausgebildet und umfasst mehrere gleichförmig ausgestaltete, sich deckend übereinander angeordnete Rastmomentbleche 4 respektive Rastmomentblechschichten. Das Rastmomentblech 4 und die Statorbleche 22 bestehen aus beispielsweise magnetisch leitendem Material, insbesondere aus Eisen (Eisenblech).

Der Statorträger 20 weist eine Bohrung 25 und darin angeordnete Lager 24 zur Aufnahme respektive Lagerung der konzentrisch zur Rotationsachse z angeordneten Rotorachse 32 des umlaufenden Rotors 3 auf. Der Statorträger 20 ist beispielsweise aus einer Kupferlegierung und die Rotorachse 32 ist beispielsweise aus rostfreiem Stahl gefertigt.

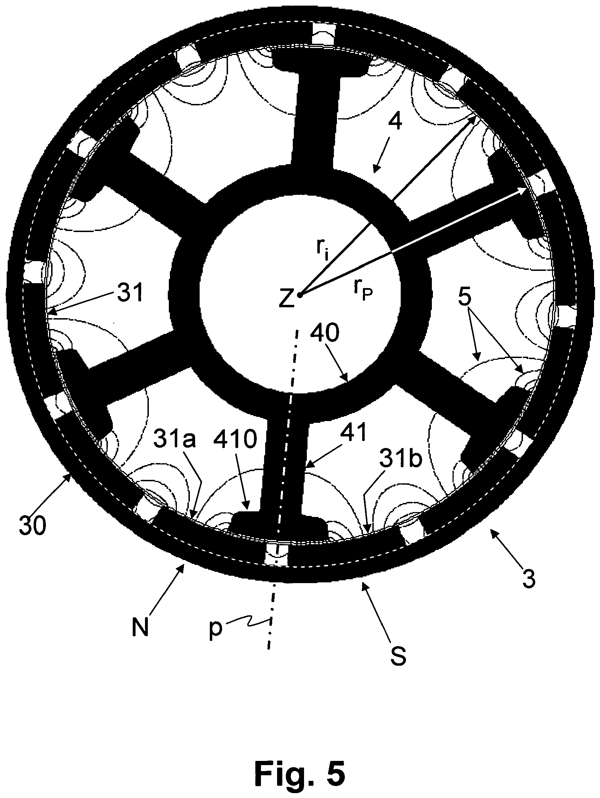

Der umlaufende Rotor 3 umfasst einen den Stator 2 umlaufenden Rotorbecher 30, welcher mit einer Halterung 33 an der Rotorachse 32 befestigt ist. Der Rotorbecher 30 weist beispielsweise einen Aussendurchmesser von zwei bis fünf Zentimeter, und eine Höhe von zwei bis vier Zentimetern auf. An der der Rotorachse 32 zugewandten Innenseite, d.h. an der Innenwand des Rotorbechers 30 sind mehrere Permanentmagnete 31 als umlaufend alternierende Pole angebracht, beispielsweise zwölf alternierende magnetische Nord- und Südpole N, S, wie in der Figur 5 ersichtlich ist. Die Permanentmagnete 31 sind vorzugsweise aus hartmagnetischen Materialien wie beispielsweise Neodym-Eisen-Bor (NdFeB) hergestellt und bilden einen an der Innenwand des Rotorbechers 30 angeordneten die Rotorachse 32 umlaufenden Reifen oder Ring. Anstelle eines Rings können die Magnete auch diskret in Kreisform angeordnet sein. In der Figur 5 illustriert der weisse, gestrichelte Kreis schematisch die Grenze zwischen dem umlaufenden Rotorbecher 30 aus beispielsweise Eisenblech, und dem darauf angebrachten umlaufenden, reifenförmigen mehrpoligen Permanentmagnetbereich.

Im zusammengesetzten Zustand ist der Rotor 3, wie in der Figur 1 dargestellt, mit der Rotorachse 32 im Statorträger 20 drehbar gelagert und der Rotorbecher 30 ist glockenartig über den Stator 2 gestülpt und frei um die Rotationsachse z und den Stator 3 drehbar.

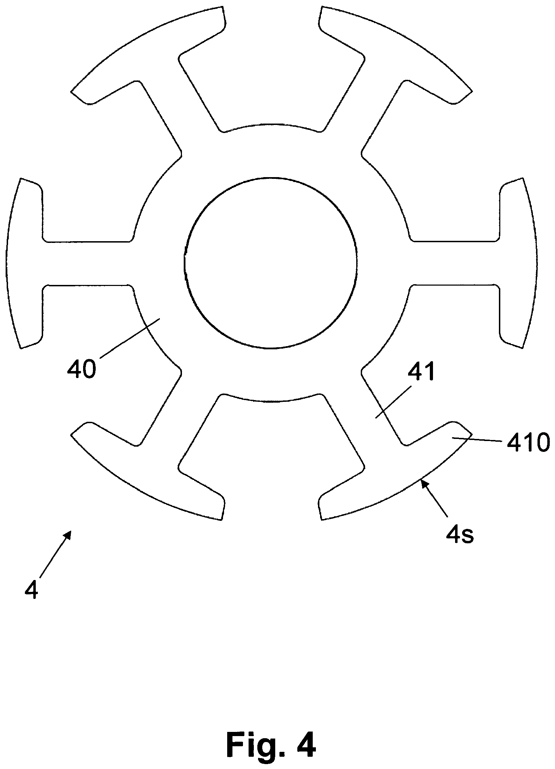

Wie in den Figuren 4 und 5 dargestellt ist, umfasst das Rastmomentblech 4 einen inneren Trägerring 40 und mehrere Polschuhe 41, die rotationssymmetrisch an der Aussenseite des Trägerrings 40 angeordnet sind. Das Rastmomentblech 4 respektive dessen Trägerring 40 ist wie in der Figur 1 ersichtlich am oberen (und/oder unteren) Endbereich des Statorträgers 20 befestigt so dass das Zentrum Z des Trägerrings auf der Rotationsachse z liegt. Im zusammengesetzten Zustand ist die Rotorachse 32 somit durch die Öffnung des Trägerrings 40 geführt.

Die Polschuhe 41 sind T-förmig ausgestaltet und weisen jeweils eine Längsache p auf, die sich im Zentrum des Trägerrings 40 treffen. Die Querbalken 410 der T-förmigen Polschuhe 41 sind jeweils vom Trägerring 40 abgewandt, auf einem zum Trägerring 40 konzentrischen äusseren Kreis angeordnet. Wie in der Figur 5 ersichtlich ist, sind die vom Trägerring abgewandten Stirnseiten 4s der Querbalken 410 der T-förmigen Polschuhe 41 vom Zentrum Z des Trägerrings 40 aus mit einem Kreisradius r_{P} gerundet. Der Kreisradius r_{P} der gerundeten Stirnseiten 4s der Querbalken 410 ist kleiner als der Innenradius rᵢ des Rotors 3 vom Zentrum der Rotorachse 32 (Rotationsachse z) bis zu den umlaufend am Rotorbecher 30 angeordneten Permanentmagneten 31, 31a, 31b, so dass zwischen den Polschuhen 41 des Rastmomentblechs 4, insbesondere zwischen den Stirnseiten 4s der Querbalken 410 der Polschuhe 41, und den Permanentmagneten 31, 31a, 31b ein Luftspalt L2 besteht und das Rastmomentblech 4 die Drehung des Rotors 3 nicht mechanisch behindert.

Die Anzahl der Polschuhe 41 des Rastmomentblechs 4 ist vorzugsweise ein ganzzahliger Teiler oder ein ganzzahliges Vielfaches der Anzahl Pole des umlaufenden Rotorbechers 30.

Im Beispiel der Figur 5 weist der Rotor 3 am Rotorbecher 30 zwölf alternierende Nord- und Südpole N, S auf und das Rastmomentblech 4 hat sechs Polschuhe 41.

Wie in der Figur 5 dargestellt ist, sind die Polschuhe 41 so angeordnet, dass ihre Längsachsen p in der Raststellung jeweils zwischen zwei am Rotorbecher 30 nebeneinander liegende, benachbarte Permanentmagnete 31a, 31b zu liegen kommt, so dass ihre Querbalken 410 jeweils zwischen zwei benachbarten Nord- und Südpolen N, S Polen einen magnetischen Kurzschluss bilden, wie aus dem dargestellten Verlauf der durch die Polschuhe 41 beeinflussten Magnetfeldlinien 5 der Permanentmagnete 31, 31a, 31b ersichtlich ist. Dabei erstreckt sich der Querbalken 410 eines Polschuhs 41 beidseitig der Längsachse p in der Ebene des Rastmomentblechs 4 jeweils über einen Teilbereich eines der benachbarten Permanentmagneten 31a, 31b und überdeckt diesen Teilbereich (mit der Stirnseite 4s des Querbalkens 410) kontaktlos. Im Beispiel der Figur 5 ist die Breite eines Querbalkens 410 kleiner als die Breite eines Permanentmagneten 31, 31a, 31b, so dass in der Raststellung jeweils weniger als die Hälfte eines Permanentmagneten 31, 31a, 31b in der Ebene des Rastmomentblechs 4 durch einen Querbalken 410 eines Polschuhs 41 kontaktlos überdeckt wird. Bei fehlendem magnetischem Drehfeld des Stators 2, d.h. im stromlosen Zustand, wenn der bürstenlose Gleichstrommotor 1 nicht betrieben wird, reicht der durch die Polschuhe 41 derart erzeugte magnetische Kurzschluss zwischen den alternierenden Nord- und Südpolen N, S aus um ein den bürstenlosen Gleichstrommotor 1 hemmendes Rastmoment zu erzeugen, das den umlaufenden Rotorbecher 30 und damit den Rotor 3 in die definierte Raststellung bringt.

Wie in der Figur 1 ersichtlich ist, ist das Rastmomentblech 4 im Wesentlichen senkrecht zu den Permanentmagneten 31 ausgerichtet und weist eine den Permanentmagneten 31 zugewandte Stirnseite 4s, die sich, wie in der Figur 4 dargestellt, jeweils auf der den Permanentmagneten 31 zugeordneten Seite des Querbalkens 410 eines Polschuhs 41 befindet. Das Rastmomentblech 4 ist hinsichtlich der Längsausrichtung der Rotationsachse z so angeordnet, dass es auf seiner Stirnseite 4s vollständig durch die Permanentmagnete 31 überdeckt wird. Das heisst der gesamte durch die Oberseite 4o und Unterseite 4u des Rastmomentblechs 4 begrenzte Bereich der Stirnseite 4s liegt nur durch den Luftspalt L2 getrennt einem durch die Permanentmagnete 31 gebildeten permanentmagnetischen Bereich gegenüber. Dadurch, dass die Permanentmagnete 31 sich über den gesamten durch die Oberseite 4o und Unterseite 4u des Rastmomentblechs 4 begrenzten Bereich der Stirnseite 4s hinweg und darüber hinaus erstrecken, kommt das Rastmomentblech 4 vollständig in den magnetischen Hauptfluss der Permanentmagnete 31 zu liegen.

Im Betrieb wird das (bewegte) Magnetfeld der Statorspulen 21 jeweils über die durch die Statorbleche 22 gebildeten Polschuhe 23 des Stators 2 ausgerichtet. Der magnetische Kreis wird im Betrieb von einem Polschuh 23 des Stators 2 über den Luftspalt L1, den Permanentmagneten 31 des Rotors 3 und durch einen Rückfluss über den Rotorbecher 30 geschlossen. Durch die Platzierung des Rastmomentblechs 4 ober- und/oder unterhalb des Stators 2 kommt das Rastmomentblech 4 ausserhalb dieses magnetischen Kreises zu liegen. Dadurch wird verhindert, dass das elektrische Verhalten des bürstenlosen Gleichstrommotors 1 durch die Anwesenheit des Rastmomentblechs 4 wesentlich beeinflusst wird. Da das Rastmomentblech 4 also im Wesentlichen ausserhalb des Wirkungsbereichs des durch den Stator 2 im Betrieb erzeugten Drehmagnetfelds angeordnet ist, haben das Rastmomentblech 4 und insbesondere dessen Polschuhe 41 während des Betriebs keinen leistungsmindernden Einfluss auf den bürstenlosen Gleichstrommotor 1.

## Patentansprüche

1. Bürstenloser Gleichstrommotor (1), umfassend einen Stator (2) und einen den Stator (2) umlaufenden Rotorbecher (30) mit mehreren permanentmagnetischen Polen (N, S), aufweisend ein mit dem Stator (2) verbundenes Rastmomentblech (4) mit mehreren Polschuhen (41) zum Erzeugen eines den umlaufenden Rotorbecher (30) in eine Raststellung bringenden Rastmoments, wobei die Polschuhe (41) derart angeordnet sind, dass sie in der Raststellung jeweils zwischen zwei benachbarten Polen (N, S) des umlaufenden Rotorbechers (30) einen magnetischen Kurzschluss bilden, und wobei
die Polschuhe (41) T-förmig ausgestaltet sind, und ihre Querbalken (410) sich in der Raststellung jeweils über einen Teilbereich der Permanentmagnete (31a, 31b) zweier benachbarter Pole (N, S) des umlaufenden Rotorbechers (30) erstrecken.

2. Bürstenloser Gleichstrommotor (1) nach Anspruch 1, **dadurch gekennzeichnet, dass** das Rastmomentblech (4) im Wesentlichen ausserhalb eines durch den Stator (2) im Betrieb erzeugten Magnetfelds angeordnet ist.

3. Bürstenloser Gleichstrommotor (1) nach einem der Ansprüche 1 oder 2, **dadurch gekennzeichnet, dass** das Rastmomentblech (4) mindestens angenähert in einer senkrecht zur Rotationsachse (z) verlaufenden Ebene über oder unter dem Stator (2) angeordnet ist.

4. Bürstenloser Gleichstrommotor (1) nach einem der Ansprüche 1 bis 3, **dadurch gekennzeichnet, dass** das Rastmomentblech (4) eine Anzahl Polschuhe (41) umfasst, die einem ganzzahligen Teiler oder Vielfachen der Anzahl Pole (N, S) des umlaufenden Rotorbechers (30) entspricht.

5. Bürstenloser Gleichstrommotor (1) nach einem der Ansprüche 1 bis 4, **dadurch gekennzeichnet, dass** die Polschuhe (41) T-förmig ausgestaltet sind, und ihre Querbalken (410) jeweils auf einem zum umlaufenden Rotorbecher (30) konzentrischen Kreis angeordnet sind.

6. Bürstenloser Gleichstrommotor (1) nach einem der Ansprüche 1 bis 5, **dadurch gekennzeichnet, dass** der Stator (2) einen axialen Statorträger (20) umfasst, und dass das Rastmomentblech (4) am Statorträger (20) angebracht ist.

7. Bürstenloser Gleichstrommotor (1) nach einem der Ansprüche 1 bis 6, **dadurch gekennzeichnet, dass** der umlaufende Rotorbecher (30) Permanentmagnete (31, 31a, 31b) aus hartmagnetischen Materialien wie Neodym-Eisen-Bor umfasst, und dass das Rastmomentblech (4) aus magnetisch leitendem Material, insbesondere aus Eisen, besteht.

8. Bürstenloser Gleichstrommotor (1) nach einem der Ansprüche 1 bis 7, **dadurch gekennzeichnet, dass** der bürstenlose Gleichstrommotor (1) mehrere gleich ausgestaltete, sich deckend übereinander angeordnete Rastmomentbleche (4) umfasst.

9. Bürstenloser Gleichstrommotor (1) nach einem der Ansprüche 1 bis 8, **dadurch gekennzeichnet, dass** der bürstenlose Gleichstrommotor (1) mehrere gleich ausgestaltete Rastmomentbleche (4) umfasst, wobei mindestens eines der Rastmomentbleche (4) in einer senkrecht zur Rotationsachse (z) verlaufenden Ebene über dem Stator (2) angeordnet ist und mindestens eines der Rastmomentbleche (4) in einer senkrecht zur Rotationsachse (z) verlaufenden Ebene unter dem Stator (2) angeordnet ist.

10. Bürstenloser Gleichstrommotor (1) nach einem der Ansprüche 1 bis 9, **dadurch gekennzeichnet, dass** das Rastmomentblech (4) vollständig im magnetischen Hauptfluss der die permanentmagnetischen Pole (N, S) bildenden Permanentmagnete (31a, 31b) angeordnet ist.

11. Bürstenloser Gleichstrommotor (1) nach einem der Ansprüche 1 bis 10, **dadurch gekennzeichnet, dass** das Rastmomentblech (4) so angeordnet ist, dass es auf seiner Stirnseite (4s) durch die Permanentmagnete (31) der permanentmagnetischen Pole (N, S) überdeckt wird.

## Claims

1. A brushless direct-current motor (1) comprising a stator (2) and a rotor cup (30) which revolves around the stator (2) and comprises several permanent magnetic poles (N, S),
a detent torque plate (4) which is connected to the stator (2) and has several pole shoes (41) for generating a detent torque that brings a rotating rotor cup (30) into a detent position, wherein the pole shoes (41) are arranged in such a way that in the detent position they create a magnetic short circuit between two adjacent poles (N, S) of the rotating rotor cup (30) and
wherein the pole shoes (41) are T-shaped in design and in the detent position their transverse bars (410) each extent over a partial area of the permanent magnets (31a, 31b) of two adjacent poles (N, S) of the rotating rotor cup (30).

2. The brushless direct-current motor (1) according to claim 1, **characterised in that** the detent torque plate (4) is essentially arranged outside a magnetic field generated by the stator (2) when in operation.

3. The brushless direct-current motor (1) according to any one of claims 1 or 2, **characterised in that** the detent torque plate (4) is arranged above or under the stator (2) in plane that is at least approximately perpendicular to the axis of rotation (z).

4. The brushless direct-current motor (1) according to any one of claims 1 to 3, **characterised in that** the detent torque plate (4) comprises a plurality of pole shoes (41) corresponding to a whole integer divisor or multiple of the number of poles (N, S) of the revolving rotor cup (30).

5. The brushless direct-current motor (1) according to any one of claims 1 to 4, **characterised in that** the pole shoes (41) are T-shaped in design and their transverse bars (410) are each arranged on a circle concentric to the revolving rotor cup (30).

6. The brushless direct-current motor (1) according to any one of claims 1 to 5, **characterised in that** the stator (2) comprises an axial stator carrier (20) and **in that** the detent torque plate (4) is applied to the stator carrier (20).

7. The brushless direct-current motor (1) according to any one of claims 1 to 6, **characterised in that** the revolving rotor cup (30) comprises permanent magnets (31, 31a, 31b) made of hard magnetic materials such as neodymium iron boron and **in that** the detent torque plate (4) consists of magnetically conductive material, more particularly of iron.

8. The brushless direct-current motor (1) according to any one of claims 1 to 7, **characterised in that** the brushless direct-current motor (1) comprises several identically designed detent torque plates (4) arranged on top of each other and covering each other.

9. The brushless direct-current motor (1) according to any one of claims 1 to 8, **characterised in that** the brushless direct-current motor (1) comprises several identically designed detent torque plates (4), wherein at least one of the detent torque plates (4) is arranged above the stator (2) in a plane extending perpendicularly to the axis of rotation (z) and at least one of the detent torque plates (4) is arranged under the stator (2) in a plane extending perpendicularly to the axis of rotation (z).

10. The brushless direct-current motor (1) according to any one of claims 1 to 9, **characterised in that** the detent torque plate (4) is arranged completely within the main magnetic flow of the permanent magnets (31a, 31b) forming the permanent magnetic poles (N, S).

11. The brushless direct-current motor (1) according to any one of claims 1 to 10, **characterised in that** the detent torque plate (4) is arranged in such a way that at its end face (4s) it is covered by the permanent magnets (31) of the permanent magnetic poles (N, S).

## Revendications

1. Moteur à courant continu sans balai (1), comprenant un stator (2) et une cloche de rotor (30) entourant le stator (2) avec plusieurs pôles (N, S) à aimantation permanente, comportant
une tôle de couple d'enclenchement (4) reliée avec le stator (2) avec plusieurs pièces polaires (41) pour créer le couple d'enclenchement amenant la cloche de rotor (30) tournante dans une position d'enclenchement, les pièces polaires (41) étant placées de telle sorte que dans la position d'enclenchement, chaque fois entre deux pôles voisins (N, S) de la cloche de rotors (30) tournante, elles créent un court-circuit magnétique et
les pièces polairee (41) étant conçues en forme de T et dans la position d'enclenchement, leurs barrettes transversales (410) s'étendant chaque fois sur une zone partielle des aimants permanents (31a, 31b) de deux pôles voisins (N, S) de la cloche de rotor (30) tournante.

2. Moteur à courant continu sans balai (1) selon la revendication 1, **caractérisé en ce que** la tôle de couple d'enclenchement (4) est placée sensiblement à l'extérieur d'un champ magnétique créé par le stator (2) en service.

3. Moteur à courant continu sans balai (1) selon l'une quelconque des revendications 1 ou 2, **caractérisé en ce que** la tôle de couple d'enclenchement (4) est placée au-dessus ou en-dessous du stator (2), au moins approximativement dans un plan s'écoulant à la perpendiculaire de l'axe de rotation (z).

4. Moteur à courant continu sans balai (1) selon l'une quelconque des revendications 1 à 3, **caractérisé en ce que** la tôle de couple d'enclenchement (4) comprend un nombre de pièces polairee (41) qui correspond à un diviseur entier ou à un multiple du nombre de pôles (N, S) de la cloche de rotor (30) tournante.

5. Moteur à courant continu sans balai (1) selon l'une quelconque des revendications 1 à 4, **caractérisé en ce que** les pièces polairee (41) sont conçues en forme de T et leurs barres transversales (410) sont placées chacune sur un cercle concentrique par rapport à la cloche de rotor (30) tournante.

6. Moteur à courant continu sans balai (1) selon l'une quelconque des revendications 1 à 5, **caractérisé en ce que** le stator (2) comprend un support de stator (20) axial et **en ce que** la tôle de couple d'enclenchement (4) est montée sur le support de stator (20).

7. Moteur à courant continu sans balai (1) selon l'une quelconque des revendications 1 à 6, **caractérisé en ce que** la cloche de rotor (30) tournante comprend des aimants permanents (31, 31a, 31b) en matières magnétiques dures, comme le néeodyme-fer-bore et **en ce que** la tôle de couple d'enclenchement (4) est constituée d'une matière magnétique conductrice, notamment de fer.

8. Moteur à courant continu sans balai (1) selon l'une quelconque des revendications 1 à 7, **caractérisé en ce que** le moteur à courant continu sans balai (1) comprend plusieurs tôles de couple d'enclenchement (4) de conception identique, superposées en coïncidence.

9. Moteur à courant continu sans balai (1) selon l'une quelconque des revendications 1 à 8, **caractérisé en ce que** le moteur à courant continu sans balai (1) comprend plusieurs tôles de couple d'enclenchement (4) de conception identique, au moins l'une des tôles de couple d'enclenchement (4) étant placée dans un plan s'écoulant à la perpendiculaire de l'axe de rotation (z), au-dessus du stator (2) et au moins l'une des tôles de couple d'enclenchement (4) étant placée dans un plan s'écoulant à la perpendiculaire de l'axe de rotation (z), en-dessous du stator (2).

10. Moteur à courant continu sans balai (1) selon l'une quelconque des revendications 1 à 9, **caractérisé en ce que** la tôle de couple d'enclenchement (4) est complètement placée dans le flux magnétique principal des aimants permanents (31a, 31b) créant les pôles (N, S) à aimantation permanente.

11. Moteur à courant continu sans balai (1) selon l'une quelconque des revendications 1 à 10, **caractérisé en ce que** la tôle de couple d'enclenchement (4) est placée de sorte à être recouverte sur sa face frontale (4s) par les aimants permanents (31) des pôles (N, S) à aimantation permanente.
